# EUROPEAN PATENT APPLICATION

(11) **EP 4 679 666 A1**
(43) Date of publication of application: **14.01.2026**
(21) Application number: 24860306.0
(22) Date of filing: 22.08.2024
(51) Int. Cl.: H02J 7/00, H04B 5/72, G06F 21/31, G06F 21/60

(54) **ELECTRONIC DEVICE AND OPERATING METHOD THEREOF**

(30) Priority: 01.09.2023 KR 20230116394
(71) Applicant: LG Energy Solution, Ltd., Seoul 07335 (KR)
(72) Inventor: JO, Yong Min, Daejeon 34122 (KR); YOON, Sun Woo, Daejeon 34122 (KR)
(74) Representative: Plasseraud IP
(86) International application number: PCT/KR2024/012484
(87) International publication number: WO 2025/048386

(57) **Abstract**

An electronic device according to an embodiment disclosed herein includes a communication circuit configured to communicate with a communication module of a battery unit and a processor configured to receive battery identification information regarding the battery unit from the communication module and request, to a server, at least a part of battery passport information related to a management history of the battery unit, based on user information related to a user and the battery identification information, in response to a request from the user.

## Description

### [TECHNICAL FIELD]

### CROSS-REFERENCE TO RELATED APPLICATION

This application claims priority to and the benefit of Korean Patent Application No. 10-2023-0116394 filed in the Korean Intellectual Property Office on September 1, 2023, the entire content of which is incorporated herein by reference.

### TECHNICAL FIELD

Embodiments disclosed herein relate to an electronic device and an operating method thereof to manage information about a battery unit.

### [BACKGROUND ART]

Recently, research and development of secondary batteries have been actively performed. Herein, the secondary batteries, which are chargeable/dischargeable batteries, may be interpreted as including all of conventional nickel (Ni)/cadmium (Cd) batteries, Ni/metal hydride (MH) batteries, etc., and recent lithium-ion batteries. Recently, the lithium-ion battery is attracting attention as a next-generation energy storage medium as a usage range thereof is expanded to a power source of electric vehicles.

An electric vehicle is supplied with electricity from outside to charge a battery cell/module, and then the battery cell/module is discharged to drive a motor and obtain power. The battery cell/module undergoes internal deformation and denaturation through various charges/discharges in production and use phases, such that physical and chemical characteristics thereof change. Therefore, it is required to manage and transmit/receive information of battery cells/modules to manage and repair the state of degenerated or deteriorated battery cells/modules.

Near field communication (NFC) is a type of non-contact short-range wireless communication technology that enables communication between wireless devices within a distance of 10 cm using a 13.56 MHz radio frequency (RF) frequency band. Users may transmit/receive a variety of information through an electronic device having mounted thereon an NFC function.

### [DISCLOSURE]

### [TECHNICAL PROBLEM]

Embodiments disclosed herein aim to provide an electronic device and an operating method thereof to manage battery passport information related to a management history of a battery.

Embodiments disclosed herein aim to provide an electronic device and an operating method thereof to efficiently transmit information in a process of managing battery passport information.

Technical problems of the embodiments disclosed herein are not limited to the above-described technical problems, and other unmentioned technical problems would be clearly understood by one of ordinary skill in the art from the following description.

### [TECHNICAL SOLUTION]

An electronic device according to an embodiment disclosed herein includes a communication circuit configured to communicate with a communication module of a battery unit and a processor configured to receive battery identification information regarding the battery unit from the communication module and request, to a server, at least a part of battery passport information related to a management history of the battery unit, based on user information related to a user and the battery identification information, in response to a request from the user.

According to an embodiment, the processor may be further configured to receive battery information regarding the battery unit from the communication module and transmit the battery information to the server such that the battery information is managed as the battery passport information of the battery unit.

According to an embodiment, the user information may include the access authority information about the battery passport information.

According to an embodiment, the processor may be further configured to receive battery passport information corresponding to an access authority of the user from the server.

According to an embodiment, the communication module may include a near field communication (NFC) module.

According to an embodiment, the NFC module may include a first memory, and the first memory may store the battery identification information and the battery information.

According to an embodiment, the processor may be further configured to receive encrypted battery information stored in the first memory of the NFC module and decrypt the encrypted battery information.

According to an embodiment, the battery passport information may include at least one of production information, use information, recycling information, and warranty information of the battery unit.

According to an embodiment, the processor may be further configured to request, to the server, information related to at least one of manufacturing information, warranty information, material information, predicted lifetime information, and renewable material content information of the battery unit in the battery passport information, when the access authority of the user corresponds to a first access authority.

According to an embodiment, the processor may be further configured to request, to the server, information related to at least one of composition information, part replacement information, removal information, state information, and renewable material content information of the battery unit in the battery passport information, when the access authority of the user corresponds to a second access authority.

According to an embodiment, the processor may be further configured to request, to the server, information related to information about law compliance of the battery unit in the battery passport information, when the access authority of the user corresponds to a third access authority.

A battery pack according to an embodiment disclosed herein includes a battery unit including a communication module and a battery management apparatus communicating with the communication module, in which the communication module is configured to communicate with an external electronic device independently of an operating state of the battery management apparatus, receive battery information regarding the battery unit from the battery management apparatus, and transmit the battery information and battery identification information regarding the battery unit to the external electronic device.

According to an embodiment, the battery management apparatus may include a second memory storing the battery information regarding the battery unit and a controller configured to encrypt the battery information, and the communication module may include a first memory storing battery information encrypted in the battery management apparatus.

An operating method of an electronic device according to an embodiment disclosed herein includes receiving battery identification information regarding the battery unit from a communication module of a battery unit and requesting, to a server, at least a part of battery passport information related to a management history of the battery unit, based on user information related to a user and the battery identification information, in response to a request from the user.

According to an embodiment, the operating method may further include receiving battery information regarding the battery unit from the communication module and transmitting the battery information to the server such that the battery information is managed as the battery passport information of the battery unit.

According to an embodiment, the user information may include access authority information regarding the battery passport information, and the operating method may further include, after requesting at least a part of the battery passport information, receiving battery passport information corresponding to an access authority of the user from the server.

According to an embodiment, the operating method may further include receiving encrypted battery information stored in a first memory of the NFC module and decrypting the encrypted battery information.

According to an embodiment, the user information may include access authority information regarding the battery passport information, and the requesting of the at least a part of the battery passport information may include requesting, to the server, information related to at least one of manufacturing information, warranty information, material information, predicted lifetime information, and renewable material content information of the battery unit in the battery passport information, when the access authority of the user corresponds to a first access authority.

According to an embodiment, the user information may include access authority information regarding the battery passport information, and the requesting of the at least a part of the battery passport information may include requesting, to the server, information related to at least one of composition information, part replacement information, removal information, state information, and renewable material content information of the battery unit in the battery passport information, when the access authority of the user corresponds to a second access authority.

According to an embodiment, the user information may include access authority information regarding the battery passport information, and the requesting of the at least a part of the battery passport information may include requesting, to the server, information related to information about law compliance of the battery unit in the battery passport information, when the access authority of the user corresponds to a third access authority.

### [ADVANTAGEOUS EFFECTS]

An electronic device and an operating method thereof according to an embodiment disclosed herein may manage battery passport information related to a battery management history.

The electronic device and the operating method thereof according to an embodiment disclosed herein may efficiently transmit information in a process of managing battery passport information.

In addition, various effects identified directly or indirectly through this document may be provided.

### [DESCRIPTION OF DRAWINGS]

FIG. 1 shows a network environment including an electronic device according to an embodiment disclosed herein.
FIG. 2 shows a battery pack according to an embodiment disclosed herein.
FIG. 3 is a block diagram of a communication module according to an embodiment disclosed herein.
FIG. 4 is a block diagram of an electronic device according to an embodiment disclosed herein.
FIGS. 5 to 7 are views showing an operating method of an electronic device according to an embodiment disclosed herein.

### [MODE FOR INVENTION]

Hereinafter, various embodiments of the present disclosure will be described with reference to the accompanying drawings. However, the description is not intended to limit the present disclosure to particular embodiments, and it should be construed as including various modifications, equivalents, and/or alternatives according to the embodiments of the present disclosure.

It should be appreciated that embodiments of the present document and the terms used therein are not intended to limit the technological features set forth herein to a particular embodiment and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "1st", "2nd," "first", "second", "A", "B", "(a)", or "(b)" may be used to simply distinguish a corresponding component from another, and does not limit the components in other aspect (e.g., importance or order), unless mentioned otherwise.

Herein, it is to be understood that when an element (e.g., a first element) is referred to, with or without the term "operatively" or "communicatively", as "connected with", "coupled with", or "linked with", or "coupled to" or "connected to" to another element (e.g., a second element), it means that the element may be connected with the other element directly (e.g., wiredly), wirelessly, or via a third element.

According to an embodiment of the disclosure, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store, or between two user devices directly. In the case of online distribution, at least a part of a computer program product may be at least temporarily stored in a machine-readable storage medium such as a memory of a server of a manufacturer, a server of an application store, or a relay server, or may be generated temporarily.

According to various embodiments of the disclosure, each of the above-described components (e.g., a module or program) may include a single entity or a plurality of entities, some of which may be separately disposed on other components. According to various embodiments of the disclosure, one or more of the above-described components or operations may be omitted or one or more other components or operations may be added. Alternatively or additionally, a plurality of components (e.g., modules or programs) may be integrated into one component. In this case, the integrated component may perform one or more functions of each of the plurality of components in a manner that is the same as or similar to a corresponding component of the plurality of components before the integration. According to various embodiments of the disclosure, operations performed by a module, a program, or other components may be executed sequentially, in parallel, repeatedly, or heuristically, or one or more of the operations may be executed in a different order or omitted, or one or more other operations may be added.

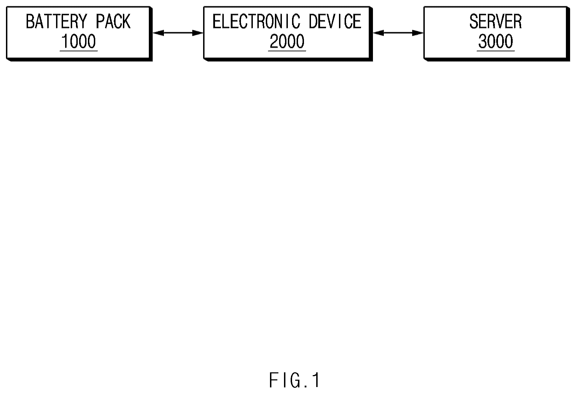

FIG. 1 shows a network environment including an electronic device according to an embodiment disclosed herein.

Referring to FIG. 1, the network environment may include a battery pack 1000, an electronic device 2000, and a server 3000.

According to an embodiment, a user of the electronic device 2000 may identify battery passport information related to the battery pack 1000 through the electronic device 2000. For example, the battery passport information may be information related to a management history of a battery unit in the battery pack 1000. According to an embodiment, the battery passport information may be generated based on battery information obtained from the battery pack 1000. For example, the battery information may include information about a use history of the battery pack 1000 and/or a state of the battery pack 1000.

According to an embodiment, the battery information may be generated in the battery pack 1000 and then transmitted to the server 3000 through the electronic device 2000. Herein, the battery information transmitted to the server 3000 may be managed as the battery passport information in the server 3000 related to a battery passport service. The battery passport information stored in the server 3000 may be provided to a user of the electronic device 2000.

According to an embodiment, the electronic device 2000 may receive the battery passport information from the server 3000 and provide the battery passport information to the user of the electronic device 2000. The electronic device 2000 may include any one of a personal computer (PC) device, a personal digital assistant (PDA) device, a wired phone terminal, and a mobile phone terminal.

According to an embodiment, the electronic device 2000 may provide the battery information obtained from the battery pack 1000 to the server 3000. The electronic device 2000 may receive the battery information from the battery pack 1000 in response to a user's input and transmit the received battery information to the server 3000.

According to an embodiment, the electronic device 2000 may request the battery passport information to the server 3000 based on user information of the user, related to the electronic device 2000, and identification information of the battery pack 1000. According to an embodiment, the electronic device 2000 may request at least a part of the battery passport information corresponding to the user information.

The server 3000 may store and/or manage the provided battery information as the battery passport information. The server 3000 may be a server on a wired or wireless web.

According to an embodiment, the server 3000 may store the battery passport information. The server 3000 may receive the battery information from the electronic device 2000 and manage the battery passport information te-by managing the battery information as the battery passport information. The server 3000 may provide the battery passport information to the user.

According to an embodiment, the server 3000 may receive the battery information from the battery pack 1000 or the electronic device 2000 periodically or according to a preset communication condition and store/manage the battery passport information. The server 3000 may receive the battery information corresponding to the battery pack 1000 or the electronic device 2000 from another server without performing direct communication with the battery pack 1000 or the electronic device 2000 and store/manage the battery passport information.

According to an embodiment, the electronic device 2000 in the network environment may communicate with the battery pack 1000 via a first network (e.g., a short-range wireless communication network), or with at least one of the battery pack 1000 or the server 3000 via a second network (e.g., a long-range wireless communication network). According to an embodiment, the electronic device 2000 may communicate with the battery pack 1000 via the server 3000.

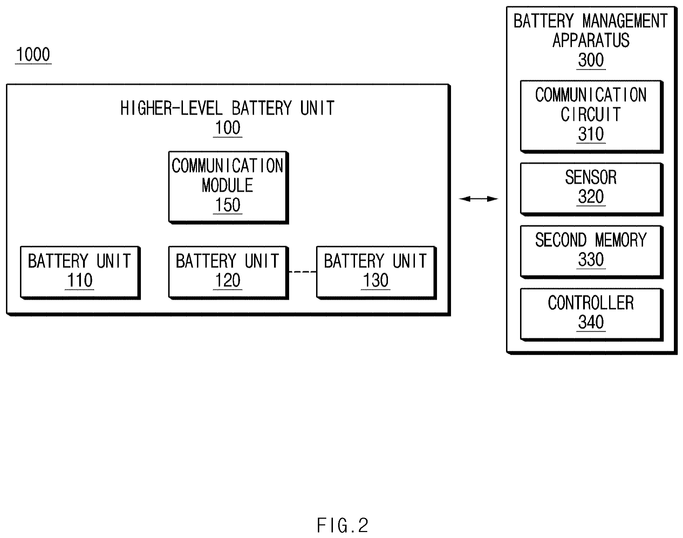

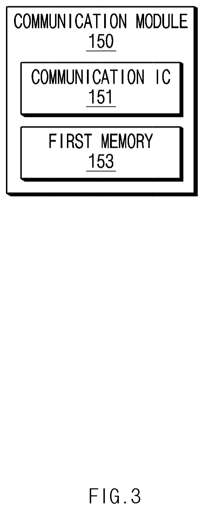

FIG. 2 shows a battery pack according to an embodiment disclosed herein. FIG. 3 is a block diagram of a communication module according to an embodiment disclosed herein.

Referring to FIG. 2, the battery pack 1000 may include a higher-level battery unit 100 and a battery management apparatus 300.

The higher-level battery unit 100 may include a plurality of battery units 110, 120, 130, ... For example, when the higher-level battery unit 100 is a battery module, the plurality of battery units 110, 120, 130 ... may be a plurality of battery cells. For example, the plurality of battery units 110, 120, 130 ... may be a lithium ion (Li-ion) battery, a Li-ion polymer battery, a nickel-cadmium (Ni/Cd) battery, a nickel hydrogen (Ni/MH) battery, etc., and are not limited thereto.

Although the higher-level battery unit 100 is illustrated as one in FIG. 2, the disclosure is not limited thereto, and the battery pack 1000 may include n higher-level battery units (n is a natural number equal to or greater than 2). In addition, some components may be excluded from the battery pack 1000 or other general-purpose components may be further included in the battery pack 1000.

The higher-level battery unit 100 may supply power to a target device (not shown). To this end, the higher-level battery unit 100 may be electrically connected to the target device. Herein, the target device may include an electrical, electronic, or mechanical device that operates by receiving power from the battery pack 1000 including the higher-level battery unit 100. For example, the target device may be, but not limited to, an electric vehicle (EV) or an energy storage system (ESS).

According to an embodiment, the higher-level battery unit 100 may include a communication module 150. The higher-level battery unit 100 may communicate with the battery management apparatus 300 through the communication module 150. According to an embodiment, the higher-level battery unit 100 may communicate with the external electronic device 2000 through the communication module 150.

While it is shown in FIG. 2 that the communication module 150 is included in the higher-level battery unit 100, the present disclosure is not limited thereto and the communication module 150 may be included in each of the plurality of battery units 110, 120, 130 ... Matters related to the communication module 150 will be described with reference to FIG. 3.

Referring to FIG. 3, the communication module 150 may include a communication integrated circuit (IC) 151 and a first memory 153. In addition, some components may be excluded from the communication module 150 or other general-purpose components may be further included in the communication module 150.

According to an embodiment, the communication IC 151 may receive the battery information from the communication circuit 310 of the battery management apparatus 300. Herein, the communication IC 151 may wirelessly or wiredly communicate with the communication circuit 310 of the battery management apparatus 300. According to an embodiment, the communication IC 151 may transmit and receive data to and from the electronic device 2000 (see FIG. 1) or the server 3000 (see FIG. 1). For example, the communication IC 151 may provide the battery information stored in the first memory 153 of the communication module 150 to the electronic device 2000 (see FIG. 1) or the server 3000 (see FIG. 1).

According to an embodiment, the battery information may be information related to the state of the battery unit 100 including the communication module 150. For example, the battery information may include at least one of a state of charge (SOC), a state of health (SOH), a resistance, a current cycle, a remaining prediction cycle, and a C-rate.

According to an embodiment, the communication IC 151 may receive encrypted battery information from the battery management apparatus 300. The encrypted battery information may be information in which data size and/or format of the battery information are changed.

According to an embodiment, the communication module 150 may include an NFC communication module. When the communication module 150 includes an NFC communication module, the communication IC 151 may include a radio frequency (RF) interface enabling RF communication. Herein, the communication IC 151 may transmit and receive an NFC signal to and from another device (e.g., the electronic device 2000) in a contactless manner. For example, the communication IC 151 may receive or transmit a signal in an NFC frequency band via an NFC antenna (not shown). According to an embodiment, the NFC antenna may include a conductive wire capable of receiving signals in a frequency band of 13 MHz to 110 MHz. According to an embodiment, the NFC antenna may transmit and receive an NFC signal in a frequency band of 13.56 MHz. The communication IC 151 may be implemented as various structures, and a structure of the communication IC 151 is not limited or restricted herein.

According to an embodiment, the first memory 153 may store data used by other components of the communication module 150 (e.g., communication IC 151). According to an embodiment, the first memory 153 may store the battery identification information and/or the battery information received from the battery management apparatus 300. According to an embodiment, the first memory 153 may store encrypted battery identification information and/or encrypted battery information received from the battery management apparatus 300.

According to an embodiment, the battery identification information may include information for identifying the battery unit 100 including the communication module 150. For example, the battery identification information may include, but is not limited to, a product serial number of the higher-level battery unit 100. Thus, the battery management apparatus 300, the external electronic device 2000, or the user may identify the battery unit 100 related to the communication module 150 through the battery identification information.

According to an embodiment, the communication module 150 may operate without a power source. According to an embodiment, when the communication module 150 is an NFC module, the communication module 150 may include a non-powered communication module not including the power source. Thus, in an embodiment where the communication module 150 is an NFC module, the communication module 150 may transmit and receive data to and from an external device through power generated in tagging of the NFC antenna of the external device (e.g., the electronic device 2000).

In another aspect, the communication module 150 may operate independently of the higher-level battery unit 100, the plurality of battery units 110, 120, 130 ..., and/or the battery management apparatus 300. According to an embodiment, the communication module 150 may operate independently of an operating state of the battery management apparatus 300. For example, when the battery management apparatus 300 does not operate, the communication module 150 may communicate with an external electronic device. To this end, the communication module 150 may transmit and receive data to and from the external electronic device even when the battery management apparatus 300 does not operate. The communication module 150 may not use power from the higher-level battery unit 100, the plurality of battery units 110, 120, 130 ..., and/or the battery management apparatus 300 and communicate with the external electronic device, without causing a loss of the power of the battery pack 1000. Thus, even when the battery management apparatus 300 is turned off, data stored in the first memory 153 of the communication module 150 may be transmitted to the external device, thereby preventing over-discharge from occurring due to consumed current of the battery management apparatus 300.

According to an embodiment, the communication module 150 may include a wireless communication module (e.g., a cellular communication module, a short-range wireless communication module, or a global navigation satellite system (GNSS) communication module) or a wired communication module (e.g., a local area network (LAN) communication module or a power line communication (PLC) module). The wireless communication module and/or the wired communication module may communicate with the external electronic device via a short-range communication network or a long-range communication network. The short-range communication network may include near field communication (NFC), Bluetooth, wireless fidelity (WiFi) direct, or infrared data association (IrDA). The long-range communication network may include a legacy cellular network, a 5G network, a next-generation communication network, the Internet, or a computer network (e.g., a LAN or WAN). The wireless communication modules and/or wired communication modules may be implemented as a single component (e.g., a single chip), or may be implemented as multi components (e.g., multi chips) separate from each other.

Referring back to FIG. 2, the battery management apparatus (a battery management system (BMS)) 300 may manage and/or control a state and/or an operation of the higher-level battery unit 100 and/or the plurality of battery units 110, 120, 130 ... For convenience of a description, each of the higher-level battery unit 100 and/or the plurality of battery units 110, 120, 130 ... may be referred to as the battery unit 100.

According to an embodiment, the battery management apparatus 300 may determine the state of the battery unit 100 and manage the state of the battery unit 100 based on the determined state. According to an embodiment, the battery management apparatus 300 may control an operation of the battery unit 100 and manage the operation of the battery unit 100 based on the controlled operation.

According to an embodiment, the battery management apparatus 300 may monitor a voltage, a current, and/or a temperature of the battery unit 100. A sensor or various measurement modules for monitoring performed by the battery management apparatus 300, which are not shown, may be additionally installed in any position of the higher-level battery unit 100, a charging/discharging path, the plurality of battery units 110, 120, 130 ... included in the higher-level battery unit 100, etc.

According to an embodiment, the battery management apparatus 300 may calculate battery information regarding the state of the battery unit 100 based on a measurement value such as monitored voltage, current, temperature, etc. For example, the battery information regarding the state of the battery unit 100 may include at least one of a state of charge (SOC), a state of health (SOH), a resistance, a current cycle, the remaining prediction cycle, and a C-rate.

The operation of the battery management apparatus 300 may also be performed in the battery management apparatus 300 or various devices such as a server, a cloud, a charger, a charger/discharger, etc., connected to a vehicle having the battery management apparatus 300 mounted thereon.

The battery management apparatus 300 may include a communication circuit 310, a sensor 320, a second memory 330, and a controller 340. However, without being limited thereto, some components may be omitted from the battery management apparatus 300 or other general-purpose components may be further included in the battery management apparatus 300.

According to an embodiment, the communication circuit 310 may establish a wired communication channel and/or a wireless communication channel between the battery management apparatus 300 and another device, and transmit and receive data through the established communication channel. According to an embodiment, the communication circuit 310 may transmit data to the communication module 150 included in the battery unit 100. For example, the communication circuit 310 of the battery management apparatus 300 may transmit the battery information and/or the battery identification information to the communication module 150 of the battery unit 100. The battery information and/or the battery identification information transmitted from the communication circuit 310 to the communication module 150 may be encrypted information.

According to an embodiment, connection between the communication circuit 310 of the battery management apparatus 300 and the communication module 150 of the battery unit 100 may be communication connection through a wired and/or wireless network. In an embodiment, the wired network may be based on a local area network (LAN) communication or a power-line communication. In an embodiment, the wireless network may be based on a short-range communication network (e.g., Bluetooth, Wireless Fidelity (WiFi), or Infrared Data Association (IrDA)) or a remote-range communication network (e.g., a cellular network, a 4th-Generation (4G) network, a 5th-Generation (5G) network).

According to an embodiment, the connection between the communication circuit 310 of the battery management apparatus 300 and the communication module 150 of the battery unit 100 may be connection using a device-to-device communication scheme (e.g., a bus, a general-purpose input and output (GPIO), a serial peripheral interface (SPI), or a mobile industry processor interface (MIPI)).

According to an embodiment, the sensor 320 may obtain information of the battery unit 100. The sensor 320 may obtain voltage, current, and/or temperature of the battery unit 100 in a charging, discharging, and/or rest process.

According to an embodiment, the second memory 330 may store data used by at least one component (e.g., the controller 340) of the battery management apparatus 300. For example, the data may include software (or an instruction related thereto), input data, or output data. According to an embodiment, the instruction, when executed by the controller 340, may cause the battery management apparatus 300 to perform operations defined by the instruction. According to an embodiment, the second memory 330 may include a volatile and/or a nonvolatile memory.

According to an embodiment, the second memory 330 may store information related to an operation performed in the battery management apparatus 300. For example, the second memory 330 may store information obtained from the sensor 320. According to an embodiment, the second memory 330 may store battery identification information related to the battery unit 100. For example, the battery identification information may include information (e.g., the product serial number of the battery unit 100) for identifying the battery unit 100. Thus, the battery management apparatus 300 may identify the battery unit 100 through the stored battery identification information.

According to an embodiment, the second memory 330 may store the battery information calculated by the controller 340 or the battery information encrypted by the controller 340.

According to an embodiment, the controller 340 may calculate the battery information based on the information related to the status of the battery unit 100. Herein, the information related to the state of the battery unit 100 may be information obtained by the sensor 320 or information stored in the second memory 330. According to an embodiment, the controller 340 may calculate one or more battery information regarding the SOC, the SOH, the resistance, the current cycle, the remaining prediction cycle, the C-rate, or a combination thereof, based on the voltage, current, temperature, etc., of the battery unit 100.

According to an embodiment, the controller 340 may provide the calculated battery information to the user. For example, the controller 340 may provide battery information to a user terminal through the communication circuit 310 and also provide the battery information through a display provided in a vehicle, a charger, etc.

According to an embodiment, the controller 340 may manage the battery information. According to an embodiment, the battery management apparatus 300 may encrypt the battery information regarding the battery unit 100. For example, the controller 340 may encrypt the battery information to manage the battery information.

According to an embodiment, the controller 340 may encrypt the battery information through various data encryption algorithms. The encryption algorithms may include various algorithms such as a message-digest algorithm (MD5), a secure hash algorithm (SHA), Rivest Shamir Adleman (RSA), advanced encryption standard (AES), etc. According to an embodiment, the controller 340 may encrypt the battery information by changing the data size and/or format of the battery information. For example, the controller 340 may adjust the number of bits of the entire data of the battery information or change the format of the data. The controller 340 may secure confidentiality, integrity, and authentication regarding the battery information through the encryption process.

According to an embodiment, the controller 340 may include a central processing unit, an application processor, a graphic processing unit, a neural processing unit (NPU), an image signal processor, a sensor hub processor, or a communication processor.

According to an embodiment, the battery management apparatus 300 may store the encrypted battery information about the battery unit 100 in the second memory 330 or transmit the same to another electronic device through the communication circuit 310. In this way, the battery management apparatus 300 may transmit the battery information while maintaining security of the battery information.

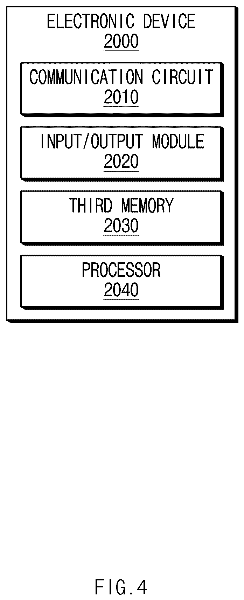

FIG. 4 is a block diagram of an electronic device according to an embodiment disclosed herein.

Referring to FIG. 4, the user may use a service provided by the server 3000 by using the electronic device 2000. For example, the service may include the battery passport service. To this end, an application for using the battery passport service may be installed in the electronic device 2000. The user may execute an application in the electronic device 2000 to subscribe to the battery passport service and register user information. For example, the user may register the user information such as user identification information, battery registration information, and/or access authority information regarding the battery passport information in an application. The user may also register information about a consent to provision of the user information in the application. According to an embodiment, the user information may be stored in the electronic device 2000 or transmitted to the server 3000 and managed therein.

Herein, the user identification information may include various information for identifying the user such as a user's mobile phone number, a user's ID and/or password, a user's name, etc. The battery registration information may include the battery identification information used in the battery passport service. According to an embodiment, the battery registration information may include information about a battery included in a vehicle (not shown) or an ESS related to the user. For example, the battery registration information may include the battery identification information (e.g., a serial number of the battery unit 100) or may include vehicle identification information (e.g., a unique number of the vehicle), identification information of the ESS (e.g., a unique number of the ESS), or a serial number of a battery unit included therein.

According to an embodiment, when the user subscribing to the battery passport service accesses the battery pack 1000 while carrying the electronic device 2000, the electronic device 2000 may receive the battery identification information from the battery pack 1000. For example, the electronic device 2000 may receive the battery identification information from the battery pack 1000 through NFC communication. When the electronic device 2000 receives the battery identification information, the application may be automatically activated. The electronic device 2000 may transmit the user information and/or the battery identification information to the server 3000 through the activated application.

According to an embodiment, the electronic device 2000 may include a communication circuit 2010, an input/output module 2020, a third memory 2030, and a processor 2040. In addition, some components may be excluded from the electronic device 2000 or other general-purpose components may be further included in the electronic device 2000.

The communication circuit 2010 may support establishment of a communication channel between the electronic device 2000 and another electronic device and communication through the established communication channel. Herein, the other electronic device may include the communication module 150, the battery management apparatus 300, the server 3000, or another random electronic device (not shown). According to an embodiment, the communication channel may include a wired communication channel or a wireless communication channel.

According to an embodiment, the communication circuit 2010 may receive the battery information and the battery identification information from the communication module 150 included in the battery unit 100 of the battery pack 1000. For example, the battery information and the battery identification information may be encrypted information. According to an embodiment, the communication circuit 2010 may transmit the user information, the battery information, and the battery identification information to the server 3000. The communication circuit 2010 may receive the user information and the battery passport information from the server 3000.

According to an embodiment, the communication circuit 2010 may include a wireless communication circuit for wireless communication or a wired communication circuit for wired communication. For example, the wireless communication circuit may include a cellular communication circuit, a short-range wireless communication circuit, or a global navigation satellite system (GNSS) communication circuit. The wired communication circuit may include a local area network (LAN) communication circuit or a power line communication circuit. The wireless communication circuit and/or the wired communication circuit may communicate with the external electronic device via a short-range communication network or a long-range communication network. The short-range communication network may include Bluetooth, WiFi direct, or IrDA. The long-range communication network may include a legacy cellular network, a 5G network, a next-generation communication network, Internet, or a computer network (e.g., an LAN or a WAN). The wireless communication modules and/or wired communication modules may be implemented as a single component (e.g., a single chip), or may be implemented as multi components (e.g., multi chips) separate from each other.

According to an embodiment, the communication circuit 2010 may include an NFC circuit and an antenna. For example, the NFC circuit may receive and process a received signal in the NFC frequency band, received via the NFC antenna, and process a transmission signal in the NFC frequency band for transmission via the NFC antenna.

According to an embodiment, the NFC antenna may receive a signal in a frequency band of 13 MHz to 110 MHz. The NFC antenna may include a conductive wire capable of receiving a signal in the frequency band of 13 MHz to 110 MHz, and the conductive wire may be implemented as one closed-loop form including a plurality of turns or a plurality of closed-loop forms including a plurality of turns. For example, the NFC antenna may transmit and receive an NFC signal in the frequency band of 13.56 MHz, receive a signal in another frequency band, or generate a magnetic field.

According to an embodiment, when the communication module 150 is an NFC communication module, the communication circuit 2010 may transmit and receive an NFC signal in the frequency band of 13.56 MHz. For example, the communication circuit 2010 of the electronic device 2000 may transmit the user information to the communication module 150 in the battery pack 1000 in a contactless manner through an NFC scheme. The communication circuit 2010 of the electronic device 2000 may receive the battery identification information and the battery information from the communication module 150 in the battery pack 1000 in the contactless manner through the NFC scheme. According to an embodiment, even when the battery management apparatus 300 of the battery pack 1000 does not operate, the communication circuit 2010 of the electronic device 2000 may receive the battery information stored in the first memory 153 of the communication module 150.

According to an embodiment, the input/output module 2020 may receive a command or data to be used by another component (e.g., the processor 2040) of the electronic device 2000, from the outside (e.g., a user) of the electronic device 2000 or output the same to the outside of the electronic device 2000. The input/output module 2020 may include an input module and/or an output module. For example, the input module may include, for example, a microphone, a mouse, a keyboard, a key (e.g., a button), or a digital pen (e.g., a stylus pen). The output module may include an audio output module or a display module. The audio output module may output an audio signal to the outside of the electronic device 2000. The audio output module may include, for example, a speaker or a receiver. The display module may visually provide information to the outside (e.g., the user) of the electronic device 2000. The display module may include, for example, a display, a hologram device, or a projector, and a control circuit for controlling the corresponding device.

According to an embodiment, the input/output module 2020 may receive information from the user of the electronic device 2000. For example, the input/output module 2020 may receive the user information such as information related to identify of the user of the electronic device 2000, unique identification information for identifying the user, user's account information (e.g., account information for accessing a battery passport service application), etc.

The third memory 2030 may store various data used by at least one component (e.g., the processor 2040) of the electronic device 2000. Here, the data may include input data or output data for the software or command. The third memory 2030 may include volatile memory or non-volatile memory. The third memory 2030 may store a program as software. For example, the third memory 2030 may include an operating system, middleware, or an application.

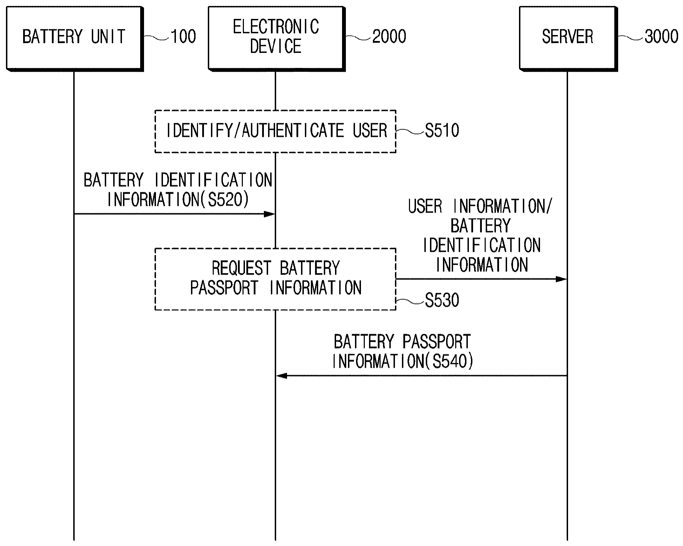

According to an embodiment, the third memory 2030 may store information received from the battery unit 100. For example, the third memory 2030 may store the battery information of the battery unit 100. According to an embodiment, the third memory 2030 may include an application for using the battery passport service. Herein, the third memory 2030 may store information used for execution of the application. For example, the third memory 2030 may store the user information, the battery identification information, the battery information, and/or the battery passport information. The operation of the processor 2040 will be described with reference to FIGS. 5 to 7.

According to an embodiment, the processor 2040 may execute, for example, software stored in the third memory 2030 (e.g., a program) to control at least one other component (e.g., a hardware or software component) of the electronic device 2000, or may perform various data processing or computation. For example, as at least part of the data processing or computation, the processor 2040 may store a command or data received from another component (e.g., the communication circuit 2010) in the volatile memory, process the command or the data stored in the volatile memory, and store resulting data in the non-volatile memory.

According to an embodiment, the processor 2040 may perform various operations performed in the application for using the battery passport. For example, the processor 2040 may identify and/or authenticate the user of the electronic device 2000 and manage the user information. The processor 2040 may manage the user information, the battery identification information, the battery information, and the battery passport information. The processor 2040 may decrypt the encrypted battery information.

According to an embodiment of the disclosure, the processor 2040 may include a main processor (e.g., a CPU or an application processor) or an auxiliary processor (e.g., a GPU, an NPU, an image signal processor (ISP), a sensor hub processor, or a communication processor) capable of operating independently of or together with the main processor. For example, when the electronic device 2000 includes the main processor and the auxiliary processor, the auxiliary processor may be adapted to consume less power than the main processor, or to be specific to a specified function. The auxiliary processor may be implemented as separate from, or as part of the main processor.

FIGS. 5 to 7 are views showing an operating method of an electronic device according to an embodiment disclosed herein.

According to an embodiment, operations of the electronic device 2000 shown in FIGS. 5 to 7 may be performed by the processor 2040 of FIG. 4. For convenience of a description, each of the higher-level battery unit 100 and/or the plurality of battery units 110, 120, 130 ... may be referred to as the battery unit 100.

Referring to FIG. 5, the operating method of the electronic device 2000 according to an embodiment disclosed herein may include step S510, performed by the electronic device 2000, of identifying and/or authenticating the user, step S520, performed by the electronic device 2000, of receiving the battery identification information from the battery unit 100, step S530, performed by the electronic device 2000, of requesting the battery passport information to the server 3000 based on the user information and the battery identification information, and step S540, performed by the electronic device 2000, of receiving at least a part of the battery passport information from the server 3000.

In step S510, the processor 2040 of the electronic device 2000 may identify and/or authenticate the user of the electronic device 2000. For example, the processor 2040 may identify whether the user of the electronic device 2000 has an authority or subscribe to the battery passport service. Such user identification/authentication may be performed through the application for using the battery passport service. For example, the processor 2040 may identify/authenticate the user by comparing a value input through the input/output module 2020 with a previously stored value. According to an embodiment, the processor 2040 may identify/authenticate the user of the electronic device 2000 by using subscriber information (e.g., an international mobile subscriber identity (IMSI)) stored in the application (or the server 3000).

According to an embodiment, the processor 2040 may obtain the user information through the user identification/authentication. According to an embodiment, the user information may be stored in the electronic device 2000 or in the server 3000. The user information may be information related to an identity of the user of the electronic device 2000. For example, the user information may include information such as the user identification information, the battery registration information, and/or the access authority information. In another aspect, the user information may include information related to the identity of the user of the electronic device 2000 or unique identification information for identifying the user. For example, the user information may differ from user to user.

According to an embodiment, the processor 2040 of the electronic device 2000 may receive data from the battery unit 100 when the user of the electronic device 2000 is an identified or authenticated user. In this way, the processor 2040 may maintain security of data transmitted to the electronic device 2000.

In step S520, the electronic device 2000 may receive the battery identification information from the battery unit 100. For example, the battery identification information may be transmitted from the communication IC 151 of the battery unit 100 to the communication circuit 2010 of the electronic device 2000 and to the processor 2040 of the electronic device 2000.

According to an embodiment, the processor 2040 of the electronic device 2000 may receive the battery identification information stored in the first memory 153 of the communication module 150 of the battery unit 100. The battery identification information may include information (e.g., the serial number of the battery unit 100) for identifying the battery unit 100 including the communication module 150. Matters related to the battery identification information have been described with reference to FIG. 3 and thus will not be repeatedly described at this time.

According to an embodiment, the battery identification information may be transmitted through the NFC scheme. For example, the battery identification information may be stored in the first memory 153 of the communication module 150 of the battery unit 100. When the user brings the electronic device 2000 close to the battery unit 100, the battery identification information may be transmitted to the electronic device 2000 from the battery unit 100. Thus, the communication module 150 may communicate with the external electronic device 2000 independently of the operating state of the battery management apparatus 300. In this way, the communication module 150 may transmit and receive various data including the battery identification information to and from the electronic device 2000 when the battery management apparatus 300 does not operate.

According to an embodiment, when the electronic device 2000 and the battery unit 100 are close to each other, the application for using the battery passport service may be automatically activated. Thus, the electronic device 2000 may receive the battery identification information through the application.

In step S530, the processor 2040 of the electronic device 2000 may request the battery passport information to the server 3000 based on the user information and the battery identification information. The battery passport information may be information related to the management history of the battery unit 100.

According to an embodiment, the battery passport information may include information related to product data of the battery unit 100. For example, the battery passport information may include at least one of production information, use information, recycling information, and warranty information of the battery unit. The battery passport information may include information related to a service for the battery unit 100. The service for the battery unit 100 may include a service for reading or analyzing data of the battery unit 100.

According to an embodiment, the battery passport information may include information for replacing or exchanging the battery unit 100. For example, the battery passport information may include chemical product declaration information, chemical product safety information, analysis certificate information, emission information, product carbon footprint information, product environmental footprint information, chemical product specification information, product information, part information, technical application information, production information, material composition information, recycling information, or a combination thereof.

According to an embodiment, the battery passport information may include various information including when the battery passport information is generated, when the battery passport information is modified last and/or expires, or when at least one component of the battery unit 100 is manufactured or shipped.

According to an embodiment, the processor 2040 may request at least a part of the battery passport information to the server 3000 based on the user information and the battery identification information, related to the user, in response to a request from the user.

According to an embodiment, the user information may include information about a user's type. According to an embodiment, the user information may include the access authority information about the battery passport information. The type of the user may include the public, a stakeholder, an executive committee, an certification authority, a market surveillance authority, or a combination thereof.

According to an embodiment, the public may be an ordinary user who purchases and uses the battery unit 100. According to an embodiment, the stakeholder may be a user related to manufacturing, remanufacturing, reuse, recycling, repair, or disassembly of the battery unit 100. According to an embodiment, the executive committee may be an institution for resolution and enactment of legislation. According to an embodiment, the authentication institution may be an institution for issuing an electronic identity card or security certificate. According to an embodiment, the market surveillance authority may be an agency for preventing and regulating unfair trades.

According to an embodiment, the processor 2040 may request at least partial information corresponding to user's access authority in the battery passport information, based on the access authority information of the user information. For example, the processor 2040 may request the battery passport information accessible to the public to the server 3000 when the access authority of the user information is the public. The processor 2040 may request the battery passport information based on the user information and the battery identification information, thereby giving an access authority selective to the battery passport information to the user. Moreover, as the processor 2040 requests a part of the battery passport information corresponding to the user authority, the electronic device 2000 may receive a small amount of information from the server 3000. In this way, the electronic device 2000 may efficiency receive information required for the user.

According to an embodiment, the processor 2040 may request information accessible to the public in the battery passport information to the server 3000 when the user's access authority is the public. For example, information accessible to the public in the battery passport information may include information included in Table 1 below.

**[Table 1]**

| Classification | Required Information | Classification | Required Information |
|---|---|---|---|
| | Information included in a battery label (Annex VI - Part A) | (p) | Round trip energy efficiency at initial and 50% of cycle-life |
| | - Manufacturer name, brand name or trademark, address, single contact, website, e-mail address | (q) | Internal battery cell and pack resistance |
| | | (r) | C-rate of relevant cycle-life test |
| | | | |
| (a) | - Element for identifying battery, such as battery category, model identifier, batch or S/N or product number | | |
| | - Manufacturing location and manufacturing date | (s) | Separation collection mark |
| | - Weight and capacity | | |
| | - Chemical composition | | |
| | - Harmful substances included in battery other than mercury, cadmium, and lead | | |
| (b) | Battery composition including critical raw material | (t) | EU conformity assessment statement |
| (f) | Carbon footprint information (carbon footprint reporting and carbon footprint performance rating) | (u) | Information related to prevention and management of waste battery |
| (g) | Responsible sourcing information according to Art 45e(3) | | |
| (h) | Recycling material information | | |
| (ha) | Renewable material content (share of renewable contents) | | |
| (i) | Rated capacity (in Ah) | | |
| (j) | Minimal, nominal and maximum voltage | | |
| (k) | Original power capability and limitation (indicated by Watts) | | |
| (f) | Battery predicted lifetime (indicated by cycle) | | |
| (m) | Capacity threshold for exhaustion (corresponding to EV battery) | | |
| (n) | Temperature range the battery can withstand when not in use | | |
| (o) | Commercial warranty period (for the calendar life applies) | | |

Referring to Table 1, when the access authority is the public, the processor 2040 may request, to the server 3000, information related to at least one of manufacturing information, warranty information, composition information, material information, carbon footprint information, predicted lifetime information, recycled material information, capacity information, voltage information, power information, temperature information, energy efficiency information, resistance information, C-rate information, cycle information, separate collection information, EU conformity assessment information, information related to waste battery prevention and management, and renewable material content information of the battery unit 100 in the battery passport information.

According to an embodiment, when the user's access authority is the stakeholder or the execution committee, the processor 2040 may request information accessible to the stakeholder or the execution committee in the battery passport information to the server 3000. For example, information accessible to the stakeholder or the execution committee in the battery passport information may include information included in Table 2 and Table 3.

**[Table 2]**

| Classification | Battery model-related information |
|---|---|
| (a) | Detailed composition, including materials used in cathode, anode and electrolyte |
| (b) | Part numbers for components and contact details of sources for replacement spares |
| (c) | Dismantling information, including at least: |
| | - Exploded view of battery system/pack showing positions of battery cells |
| | - Type of engaging method and quantity |
| | - Tool for disassembly |
| | - Warning for risk of damage to components |
| (d) | Safety measures |

**[Table 3]**

| Classification | Information about individual batteries |
|---|---|
| | Performance and durability information for Article 10(1) (at the time of batter y release and whenever there is a change in state) |
| | 1. Rated capacity (in Ah) and capacity fade (in %). |
| (a) | 2. Power (in W) and power fade (in %). |
| | 3. Internal resistance (in Ω) and internal resistance increase (in %). |
| | 4. Where applicable, energy round trip efficiency and its fade (in %). |
| | 5. Their expected lifetime under the reference conditions for which they have been designed in terms of cycles, except for non-cycle applications, and calendar years. |
| | SOH related information of Article 14 |
| | [EV Battery] State of certified energy (SOCE) |
| | [ESS and LMT batteries] |
| (aa) | 1. Remaining capacity |
| | 2. If possible, remaining power capability |
| | 3. If possible, remaining round trip efficiency |
| | 4. Evolution of self-discharging rates |
| | 5. If possible, ohmic resistance |
| (b) | Information about battery state (original, repurposed, reused, remanufactured, or waste) |
| (c) | Battery use history including the number of charging/discharging cycles, history of adverse events, periodically recorded operating environment and SOC information |
| (h) | Recycling material information |
| (ha) | Renewable material content (share of renewable contents) |
| (i) | Rated capacity (in Ah) |

Referring to Table 2 and Table 3, for example, when the access authority is the stakeholder or the execution committee, the processor 2040 may request, to the server 3000, information related to at least one of composition information, part replacement information, removal information, state information, information for safety measures, performance information, durability information, SOH/SOC information, use history information, recycling material information, capacity information, and renewable material content information in the battery passport information.

According to an embodiment, when the user's access authority is the certification authority, the market surveillance authority, or the execution committee, the processor 2040 may request information accessible to the certification authority, the market surveillance authority, or the execution committee in the battery passport information to the server 3000. For example, information accessible to the public in the battery passport information may include information included in Table 4 below.

**[Table 4]**

| Classification | Information accessible to certification authority, market surveillance authority, and execution committee |
|---|---|
| (a) | Results of tests reports proving compliance with the requirements set out in this |
| | Regulation or any implementing or delegated act adopted on its basis |

Referring to Table 4, for example, when the access authority is the certification authority, the market surveillance authority, or the execution committee, the processor 2040 may request, to the server 3000, information related to information regarding law compliance in the battery passport information. The information regarding law compliance may include test reports for checking law compliance to requirements in the battery passport related legislation.

In step S540, the electronic device 2000 may receive the battery passport information from the server 3000. According to an embodiment, the processor 2040 may receive the battery passport information corresponding to the user's access authority from the server 3000. The processor 2040 may receive at least a part of the battery passport information corresponding to the user's access authority, thereby reducing the amount of the battery passport information and improving transmission speed. The processor 2040 may also receive some information other than the entire battery passport information stored in the server 3000 according to the user's access authority, thereby improving the security of the battery passport information.

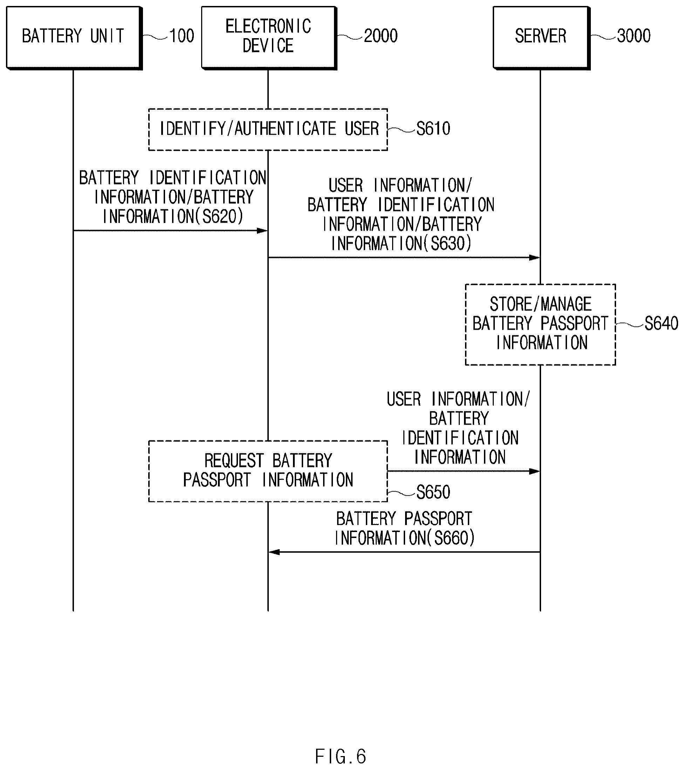

Referring to FIG. 6, the operating method of the electronic device 2000 according to an embodiment disclosed herein may include step S610, performed by the electronic device 2000, of identifying and/or authenticating the user, step S620, performed by the electronic device 2000, of receiving battery identification information and battery information from the battery unit 100, step S630, performed by the electronic device 2000, of transmitting user information, the battery identification information, and the battery information to the server 3000, step S640, performed by the server 3000, of storing and/or managing the battery passport information, step S650, performed by the electronic device 2000, of requesting the battery passport information to the server 3000 based on the user information and the battery identification information, and step S660, performed by the electronic device 2000, of receiving at least a part of the battery passport information from the server 3000.

In step S610, the processor 2040 of the electronic device 2000 may identify or authenticate the user of the electronic device 2000. Such user identification/authentication may be performed through the application for using the battery passport service. According to an embodiment, the processor 2040 may obtain the user information through the user identification/authentication. A description of the user identification/authentication and the user information has been provided with reference to FIG. 5 and thus will not be repeatedly provided.

In step S620, the electronic device 2000 may receive the battery identification information and the battery information from the battery unit 100. For example, the battery identification information and the battery information may be transmitted from the communication IC 151 of the battery unit 100 to the communication circuit 2010 of the electronic device 2000 and may be provided to the processor 2040 of the electronic device 2000.

According to an embodiment, the processor 2040 of the electronic device 2000 may receive the battery identification information and the battery information stored in the first memory 153 of the communication module 150 of the battery unit 100. The battery identification information may include information (e.g., the serial number of the battery unit 100) for identifying the battery unit 100 including the communication module 150. The battery information may include information related to the use history of the battery unit 100 or the state of the battery unit 100.

According to an embodiment, the battery identification information and the battery information may be transmitted in the NFC manner. For example, the battery identification information and the battery information may be stored in the first memory 153 of the communication module 150 of the battery unit 100. When the user brings the electronic device 2000 close to the battery unit 100, the battery identification information and the battery information may be transmitted to the electronic device 2000 from the battery unit 100. Thus, the communication module 150 may communicate with the external electronic device 2000 independently of the operating state of the battery management apparatus 300. In this way, the communication module 150 may transmit and receive the battery identification information and the battery information to and from the electronic device 2000 when the battery management apparatus 300 does not operate.

According to an embodiment, when the electronic device 2000 and the battery unit 100 are close to each other, the application for using the battery passport service may be automatically activated. Thus, the electronic device 2000 may receive the battery identification information and the battery information through the application.

In step S630, the processor 2040 of the electronic device 2000 may transmit the user information, the battery identification information, and the battery information to the server 3000. According to an embodiment, the processor 2040 of the electronic device 2000 may transmit the battery information to the server 3000 such that the battery information regarding the battery unit 100 is managed as the battery passport information of the battery unit 100. The battery passport information may be information related to the management history of the battery unit 100. For example, the battery passport information may include at least one of production information, use information, recycling information, and warranty information of the battery unit. A description of the battery passport information has been provided with reference to FIG. 5 and thus will not be repeatedly provided herein.

According to an embodiment, the processor 2040 of the electronic device 2000 may transmit the battery information received from the battery unit 100 to the server 3000, regardless of the access authority of the user information. In this way, the processor 2040 may update the latest information about the battery unit 100 in the battery passport information, regardless of the user of the electronic device 2000. Thus, the processor 2040 may accurately manage the battery passport information.

In step S640, the server 3000 may store and/or manage the battery passport information. For example, the server 3000 may update the battery passport information based on the provided user information, battery identification information, and battery information. According to an embodiment, the server 3000 may store the battery information in the battery passport information corresponding to the battery identification information. The server 3000 may classify and store a type of the battery information. Thus, the server 3000 may manage the battery information as the battery passport information. In this way, the server 3000 may maintain the up-to-dateness of the battery passport information. At the request of the user, the server 3000 may provide the battery passport information to the user. Thus, the user may manage the battery unit 100 through the latest battery passport information.

In step S650, the processor 2040 of the electronic device 2000 may request the battery passport information to the server 3000 based on the user information and the battery identification information. The battery passport information may be information related to the management history of the battery unit 100. According to an embodiment, the processor 2040 may request at least a part of the battery passport information to the server 3000 based on the user information and the battery identification information, related to the user, in response to a request from the user.

In step S660, the electronic device 2000 may receive the battery passport information from the server 3000. According to an embodiment, the processor 2040 may receive the battery passport information corresponding to the user's access authority from the server 3000. The processor 2040 may receive at least a part of the battery passport information corresponding to the user's access authority, thereby reducing the amount of the battery passport information and improving transmission speed. The processor 2040 may also receive some information other than the entire battery passport information stored in the server 3000 according to the user's access authority, thereby improving the security of the battery passport information.

Operations S610 to S640 described with reference to FIG. 6 are also applicable to when the battery unit 100, the electronic device 2000, or the server 3000 is implemented by a different manufacturer. For example, the server 3000 may be a higher-level server 3000 that stores/manages the battery passport information regarding the battery units 100 of different manufacturers. As the battery passport information is managed in the higher-level server 3000, the user may easily manage the battery units 100 of various manufacturers.

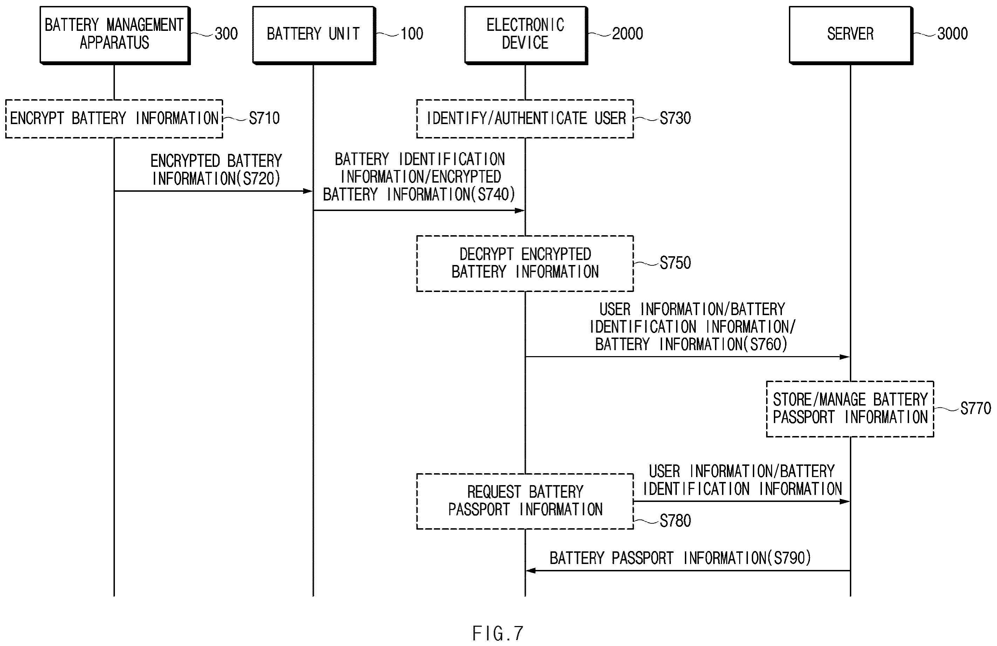

Referring to FIG. 7, the operating method of the electronic device 2000 according to an embodiment disclosed herein may include step S710, performed by the battery management apparatus 300, of encrypting battery information, step S720, performed by the battery unit 100, of receiving encrypted battery information, step S730, performed by the electronic device 2000, of identifying and/or authenticating the user, step S740, performed by the electronic device 2000, of receiving battery identification information and encrypted battery information from the battery unit 100, step S750, performed by the electronic device 2000, of decrypting the encrypted battery information, step S760, performed by the electronic device 2000, of transmitting user information, the battery identification information, and the battery information to the server 3000, step S770, performed by the server 3000, of storing and/or managing the battery passport information, step S780, performed by the electronic device 2000, of requesting the battery passport information to the server 3000 based on the user information and the battery identification information, and step S790, performed by the electronic device 2000, of receiving at least a part of the battery passport information from the server 3000.

In step S710, the battery management apparatus 300 may encrypt the battery information. According to an embodiment, the controller 340 of the battery management apparatus 300 may encrypt the battery information to generate the encrypted battery information. For example, the controller 340 may encrypt the battery information through various data encryption algorithms. A description of encryption of the battery information by the controller 340 has already been provided with reference to FIGS. 2 and 3 and thus will not be repeatedly provided. As the controller 340 of the battery management apparatus 300 encrypts the battery information, the controller 340 may improve the stability of the battery information and the security of communication.

In step S720, the battery unit 100 may receive the encrypted battery information. According to an embodiment, the communication circuit 310 of the battery management apparatus 300 may transmit the encrypted battery information to the communication module 150 of the battery unit 100.

According to an embodiment, the battery unit 100 may store the encrypted battery information. For example, the encrypted battery information received in the communication module 150 of the battery unit 100 may be stored in the first memory 153 of the communication module 150.

In step S730, the electronic device 2000 may identify and/or authenticate the user.

In step S740, the electronic device 2000 may receive the encrypted battery information and the battery identification information from the battery unit 100. For example, the communication circuit 2010 of the electronic device 2000 may receive the encrypted battery information and the battery identification information regarding the battery unit 100 from the communication module 150 of the battery unit 100.

In step S750, the electronic device 2000 may decrypt the encrypted battery information. For example, the processor 2040 of the electronic device 2000 may decrypt the encrypted battery information. According to an embodiment, the processor 2040 may decrypt the encrypted battery information through various data decryption algorithms. According to an embodiment, the controller 340 may decrypt the encrypted battery information by changing the data size and/or format of the encrypted battery information. For example, the processor 2040 may adjust the number of bits of the entire data of the battery information or change the format of the data.

According to an embodiment, the processor 2040 of the electronic device 2000 may decrypt the encrypted battery information through an application for using the battery passport service. Herein, the application may include a program for executing a decryption operation. As the decryption operation is performed in the application, the application may manage the security of data transmission among the battery management apparatus 300, the battery unit 100, and the electronic device 2000.

In step S760, according to an embodiment, the decrypted battery information, the battery identification information, and the user information may be transmitted to the server 3000. For example, the processor 2040 of the electronic device 2000 may transmit the battery information to the server 3000 such that the decrypted battery information is managed as the battery passport information.

In step S770, the server 3000 may store and/or manage the battery passport information. For example, the server 3000 may manage the battery passport information based on the provided battery information, battery identification information, and user information.

In step S780, the electronic device 2000 may request the battery passport information to the server 3000 based on the user information and the battery identification information.

In step S790, the electronic device 2000 may receive at least a part of the battery passport information from the server 3000.

Operations S770 to S790 are the same as operations S640 to S660 of FIG. 5. Thus, operations S770 to S790 will not be described repeatedly.

Even though all components constituting an embodiment disclosed herein have been described above as being combined into one or operating in combination, the embodiments disclosed herein are not necessarily limited to the embodiment. That is, within the object scope of the embodiments disclosed herein, all the components may operate by being selectively combined into one or more.

Moreover, terms such as "include", "constitute" or "have" described above may mean that the corresponding component may be inherent unless otherwise stated, and thus should be construed as further including other components rather than excluding other components. All terms including technical or scientific terms have the same meanings as those generally understood by those of ordinary skill in the art to which the embodiments disclosed herein pertain, unless defined otherwise. The terms used generally like terms defined in dictionaries should be interpreted as having meanings that are the same as the contextual meanings of the relevant technology and should not be interpreted as having ideal or excessively formal meanings unless they are clearly defined in this document.

The foregoing disclosure may roughly show features of several embodiments to allow those of ordinary skill in the art to better understand aspects of the present disclosure. Those of ordinary skill in the art will appreciate that they may readily use the present disclosure as a basis for designing or modifying other structures to carry out the same purposes or achieve the same advantages of the embodiments introduced herein. Additionally, it would be recognized by those of ordinary skill in the art that such equivalent configurations may not depart from the scope of the present disclosure, and various changes, substitutions, and modifications may be made herein without departing from the scope of the present disclosure.

## Claims

1. An electronic device comprising:
a communication circuit configured to communicate with a communication module of a battery unit; and
a processor configured to:
receive battery identification information regarding the battery unit from the communication module; and
request, to a server, at least a part of battery passport information related to a management history of the battery unit, based on user information related to a user and the battery identification information, in response to a request from the user.

2. The electronic device of claim 1, wherein the processor is further configured to:
receive battery information regarding the battery unit from the communication module; and
transmit the battery information to the server such that the battery information is managed as the battery passport information of the battery unit.

3. The electronic device of claim 1, wherein the user information comprises access authority information regarding the battery passport information.

4. The electronic device of claim 3, wherein the processor is further configured to receive battery passport information corresponding to an access authority of the user from the server.

5. The electronic device of claim 2, wherein the communication module comprises a near field communication (NFC) module.

6. The electronic device of claim 5, wherein the NFC module comprises a first memory, and
the first memory stores the battery identification information and the battery information.

7. The electronic device of claim 6, wherein the processor is further configured to:
receive encrypted battery information stored in the first memory of the NFC module; and
decrypt the encrypted battery information.

8. The electronic device of claim 1, wherein the battery passport information comprises at least one of production information, use information, recycling information, and warranty information of the battery unit.

9. The electronic device of claim 3, wherein the processor is further configured to request, to the server, information related to at least one of manufacturing information, warranty information, material information, predicted lifetime information, and renewable material content information of the battery unit in the battery passport information, when the access authority of the user corresponds to a first access authority.

10. The electronic device of claim 3, wherein the processor is further configured to request, to the server, information related to at least one of composition information, part replacement information, removal information, state information, and renewable material content information of the battery unit in the battery passport information, when the access authority of the user corresponds to a second access authority.

11. The electronic device of claim 3, wherein the processor is further configured to request, to the server, information related to information about law compliance of the battery unit in the battery passport information, when the access authority of the user corresponds to a third access authority.

12. A battery pack comprising:
a battery unit comprising a communication module; and
a battery management apparatus communicating with the communication module,
wherein the communication module is configured to:
communicate with an external electronic device independently of an operating state of the battery management apparatus;
receive battery information regarding the battery unit from the battery management apparatus; and
transmit the battery information and battery identification information regarding the battery unit to the external electronic device.

13. The battery pack of claim 12, wherein the battery management apparatus comprises:
a second memory storing the battery information regarding the battery unit; and
a controller configured to encrypt the battery information, and
the communication module comprises a first memory storing battery information encrypted in the battery management apparatus.

14. An operating method of an electronic device comprising:
receiving battery identification information regarding a battery unit from a communication module of the battery unit; and
requesting, to a server, at least a part of battery passport information related to a management history of the battery unit, based on user information related to a user and the battery identification information, in response to a request from the user.

15. The operating method of claim 14, further comprising:
receiving battery information regarding the battery unit from the communication module; and
transmitting the battery information to the server such that the battery information is managed as the battery passport information of the battery unit.

16. The operating method of claim 14, wherein the user information comprises access authority information regarding the battery passport information, and
the operating method further comprises, after requesting at least a part of the battery passport information, receiving battery passport information corresponding to an access authority of the user from the server.

17. The operating method of claim 15, further comprising:
receiving encrypted battery information stored in a first memory of the communication module; and
decrypting the encrypted battery information.

18. The operating method of claim 14, wherein the user information comprises access authority information regarding the battery passport information, and
the requesting of the at least a part of the battery passport information comprises requesting, to the server, information related to at least one of manufacturing information, warranty information, material information, predicted lifetime information, and renewable material content information of the battery unit in the battery passport information, when the access authority of the user corresponds to a first access authority.

19. The operating method of claim 14, wherein the user information comprises access authority information regarding the battery passport information, and
the requesting of the at least a part of the battery passport information comprises requesting, to the server, information related to at least one of composition information, part replacement information, removal information, state information, and renewable material content information of the battery unit in the battery passport information, when the access authority of the user corresponds to a second access authority.

20. The operating method of claim 14, wherein the user information comprises access authority information regarding the battery passport information, and
the requesting of the at least a part of the battery passport information comprises requesting, to the server, information related to information about law compliance of the battery unit in the battery passport information, when the access authority of the user corresponds to a third access authority.
